# EUROPÄISCHE PATENTANMELDUNG

(11) **EP 1 102 386 A2**
(43) Veröffentlichungstag der Anmeldung: **23.05.2001**
(21) Anmeldenummer: 00124724.6
(22) Anmeldetag: 13.11.2000
(51) Int. Cl.: H02K 23/02, H02K 23/04

(54) **Gleichstrommaschine**

(30) Priorität: 16.11.1999 DE 19955006
(71) Anmelder: PILLER-GmbH, 37520 Osterode am Harz (DE)
(72) Erfinder: Okla, Omar, Dr., 13357 Berlin (DE); Sachs, Klaus, Dipl.- Ing., 37520 Osterode am Harz (DE)
(74) Vertreter: Patentanwälte Rehberg + Hüppe

(57) **Zusammenfassung**

Bei einer Gleichstrommaschine (1) mit einem Erreger (4), einem Anker (3) und einer Drehachse (2), weist der Erreger (4) Permanentmagnete (7) auf, die mindestens einem Paar von ungleichnamigen Polen (N und S) zugeordnet sind. Jeder Pol (N bzw. S) weist mindestens zwei in tangentialer Richtung um die Drehachse (2) beabstandete Teilpole (5) mit Permanenterregung auf, zwischen denen ein Hilfspol (6) mit elektrischer Erregung angeordnet ist.

## Beschreibung

Die Erfindung bezieht sich auf eine Gleichstrommaschine mit einem Erreger, einem Anker und einer Drehachse, wobei der Erreger Permanentmagnete aufweist, die mindestens einem Paar von ungleichnamigen Polen zugeordnet sind.

Bei Gleichstrommaschinen unterscheidet man zwei grundsätzliche Bauarten. Bei der einen Bauart weist der Erreger elektrisch erregte Pole zur Erzeugung des Erregerfelds auf. Bei der anderen Bauart sind zur Erzeugung des Erregerfelds Permanentmagnete vorgesehen. Derartige Gleichstrommaschinen werden auch als permanenterregte Gleichstrommaschinen bezeichnet. Im ersten Fall handelt es sich um eine Gleichstrommaschine mit Erregerwicklung.

Der Vorteil einer Gleichstrommaschine mit Erregerwicklung besteht darin, daß bei konstanter Ankerspannung durch Änderung des Stroms durch die Erregerwicklung das Hauptfeld der Gleichstrommaschine und damit die Drehzahl verändert werden kann. Diese Möglichkeit ist bei einer permanenterregten Gleichstrommaschine nicht gegeben. Umgekehrt zeichnen sich permanenterregte Gleichstrommaschinen dadurch aus, daß kleine Bauformen möglich sind und keine Stromwärmeverluste wie bei einer Erregerwicklung anfallen. Weitere Stromwärmeverluste treten bei elektrisch erregten Gleichstrommaschinen durch die Notwendigkeit von ebenfalls elektrisch erregten Wendepolen und, bei häufigem Anfahren der Gleichstrommaschine, auch durch die Notwendigkeit eines Anlassers auf.

Der Erfindung liegt die Aufgabe zugrunde, ausgehend von einer Gleichstrommaschine der eingangs beschriebenen Art, bei der der Erreger Permanentmagnete aufweist, eine Möglichkeit aufzuzeigen, die Vorteile beider Bauarten von Gleichstrommaschinen zu nutzen.

Erfindungsgemäß wird diese Aufgabe dadurch gelöst, daß bei einer Gleichstrommaschine der eingangs beschriebenen Art jeder Pol mindestens zwei in tangentialer Richtung um die Drehachse beabstandete Teilpole mit Permanenterregung aufweist, zwischen denen ein Hilfspol mit elektrischer Erregung angeordnet ist. Bei der neuen Gleichstrommaschine setzt sich die Erregung jedes Pols aus der Permanenterregung der Teilpole und der elektrischen und damit grundsätzlich variablen Erregung mindestens eines Hilfspols zusammen. So wird ein wesentlicher Teil der Erregung immer ohne Stromwärmeverluste erreicht. Gleichzeitig ist ein anderer Teil der Erregung so variabel, daß eine Veränderung der Drehzahl der Gleichstrommaschine auch bei konstanter Ankerspannung möglich ist. Hierfür muß zwar ein gewisser Stromwärmeverlust in Kauf genommen werden, doch entspricht dieser nur der gewünschten Variabilität in der Gesamterregung und nicht dem Gesamtbetrag der Gesamterregung.

Um die Stromwärmeverluste bei der neuen Gleichstrommaschine zu minimieren kann die Erregung des Hilfspols eine wechselnde Polarität aufweisen. Das heißt, der Hilfspol ist nicht nur vorgesehen, um einen positiven Beitrag zu der Gesamterregung des jeweiligen Pols zu liefern. Es kann auch vorgesehen sein, daß der Hilfspol einen negativen Beitrag hierzu liefert. Dies mutet zunächst widersinnig an, doch kann auf diese Weise mit einem Hilfspol gegebener Größe eine maximale Bandbreite von Gesamterregungen des jeweiligen Pols abgedeckt werden. Die mögliche Bandbreite der Gesamterregung des Pols errechnet sich in guter Näherung aus der Permanenterregung der Teilpole plus/minus der maximalen Erregung des Hilfspols.

Wenn die Größe der Erregung des Hilfspols bei der neuen Gleichstrommaschine stufenlos einstellbar ist, kann die Drehzahl der Gleichstrommaschine in einem gewissen Bereich stufenlos eingestellt werden. Häufig reicht es aber aus, wenn die Gleichstrommaschine eine bestimmte feste Anzahl von Drehzahlstufen erreichen kann. Dann ist es auch ausreichend, die Größe der Erregung des Hilfspols in Stufen einzustellen. Beispielsweise ist daran zu denken, den Hilfspol im Vergleich zu den beiden benachbarten Teilpolen mit entgegengesetzter Polarität voll, überhaupt nicht oder mit gleichnamiger Polarität voll zu erregen. Hiermit werden drei gleich beabstandete Drehzahlstufen für die Gleichstrommaschine möglich.

Die Größe der Erregung des Hilfspols kann bei der neuen Gleichstrommaschine so geregelt werden, daß die Gleichstrommaschine unter wechselnden Betriebsbedingungen eine konstante Drehzahl aufweist. Dies entspricht einer kontinuierlichen Regelung der Erregung des Hilfspols. Es ist aber auch möglich, die Erregung des Hilfspols nur einmal einzustellen, um damit trotz bei der Herstellung der Gleichstrommaschine auftretenden Toleranzen bei einer bestimmten Last eine definierte Drehzahl der Gleichstrommaschine sicherzustellen. Dies ist beispielsweise mit einem einfachen einstellbaren Potentiometer in Reihe mit der Erregerwicklung des Hilfspols möglich.

Um nur eine bestimmte Drehzahl der Gleichstrommaschine mit dem Hilfspol einzustellen, reicht ein Hilfspol vergleichsweise geringer maximaler Erregung aus. Um umgekehrt eine möglichst große Bandbreite von Drehzahlen der Gleichstrommaschine abdecken zu können, kann es interessant sein, die maximale Erregung des Hilfspols genau so groß zu wählen wie die Gesamterregung der beiden benachbarten Teilpole. In diesem Fall ist von einer Gesamterregung über den gesamten Pol von null bis zu einer Gesamterregung vom Doppelten der Permanenterregung im Prinzip alles möglich. Als besonders günstig hat sich jedoch herausgestellt, den Hilfspol so zu dimensionieren, daß er für eine maximale Erregung vorgesehen ist, die vom Betrag her zwischen 0,45 und 0,55-mal, also etwa halb so groß ist wie die Gesamterregung der beiden benachbarten Teilpole.

Bei der neuen Gleichstrommaschine müssen in der Regel keine Wendepole vorgesehen sein. Entsprechend treten auch keine hiermit potentiell verbundene Stromwärmeverluste auf.

Die Notwendigkeit eines Wendepols kann insbesondere dann vermieden werden, wenn der Teilpol, an dem der Anker aus dem Bereich des jeweiligen Pols heraustritt, in der Drehrichtung der Gleichstrommaschine hintereinander Permanentmagnete aus unterschiedlichen magnetischen Materialien aufweist. Diese Materialien sind so abzustimmen, daß die Bildung von Bürstenfeuer vermieden wird. Hierzu ist der Gradient des magnetischen Felds, welches auf den aus dem Bereich des jeweiligen Pols austretenden Anker einwirkt, möglichst klein zu halten. Beispielsweise kann im Außenbereich des Pols der jeweilige Teilpol aus dem Werkstoff BaFe₅ ausgebildet sein, während er im Kernbereich aus dem Material NdFeB ausgebildet ist, das eine höhere Magnetisierung zuläßt bei größerer magnetischer Härte.

Die neue Gleichstrommaschine benötigt keinen Anlasser und weist entsprechend keine diesbezüglichen Stromwärmeverluste auf.

Eine Gleichstrommaschine mit besonders hohem Wirkungsgrad wird erreicht, wenn die neue Gleichstrommaschine nur ein Paar ungleichnamiger Pole mit jeweils zwei Teilpolen und einem Hilfspol aufweist. In diesem Fall kann der Wickelkopf besonders kurz ausfallen. Zur weiteren Verkürzung der Wickellänge ist eine kurze Ankerlänge anzustreben, d. h., daß der Anker ein kleines Länge zu Durchmesser-Verhältnis von maximal 0,5 aufweisen sollte.

Die Erfindung wird im folgenden anhand von zwei Ausführungsbeispielen näher erläutert und beschrieben, dabei zeigt
- Fig. 1: den prinzipiellen Aufbau einer zweipoligen Gleichstrommaschine und
- Fig. 2: den prinzipiellen Aufbau einer vierpoligen Gleichstrommaschine, jeweils in Blickrichtung ihrer Drehachse.

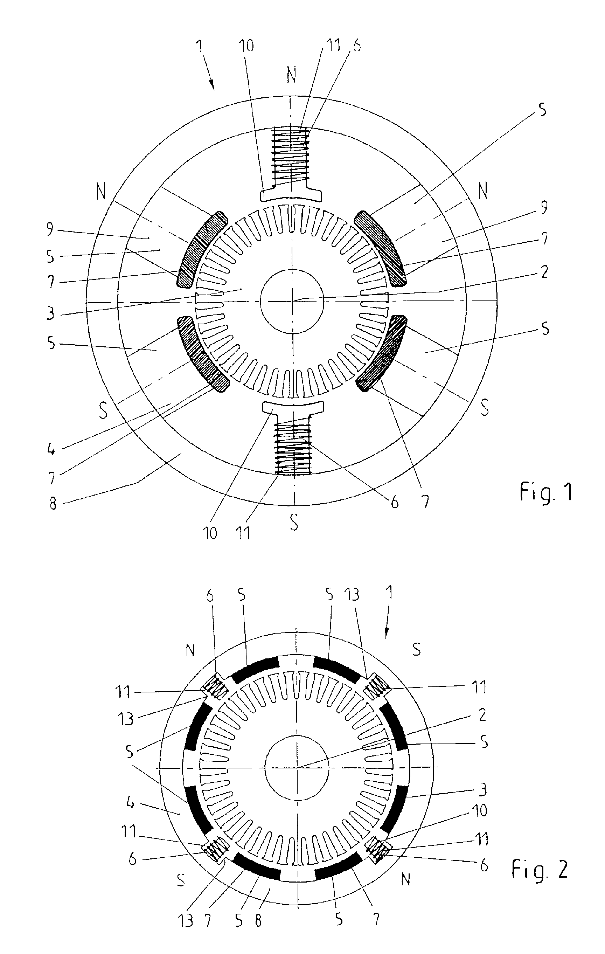

Die in Fig. 1 in ihren für die Erfindung wesentlichen Bestandteilen dargestellte Gleichstrommaschine 1 weist einen um eine Drehachse 2 umlaufenden Anker 3 auf. Die in üblicher Weise angebrachte Ankerwicklung ist dabei ebenso wenig dargestellt wie die zugehörige Bürstenanordnung. Weiterhin weist die elektrische Maschine 1 einen Erreger 4 auf. Der Erreger 4 umfaßt zwei ungleichnamige Pole N und S. Jeder dieser Pole besteht aus zwei Teilpolen 5 und einem Hilfspol 6. Die Teilpole 6 werden jeweils durch einen Permanentmagnet 7 permanent magnetisch erregt. Mit einem umlaufenden Joch 8 des Erregers 4 sind die Permanentmagnete 7 über Eisenrückschlußstücke 9 verbunden. Die Eisenrückschlußstücke 9 sind geblecht und geschraubt. Das Joch 8 kann massiv oder geblecht sein. Die Hilfspole 6 weisen in Bezug auf die Drehachse 2 radial hinter einem Polschuh 10 eine Erregerwicklung 11 auf. Die Hilfspole sind dabei wie die Eisenrückschlußstücke 9 geblecht und geschraubt ausgebildet. Mit der Erregerwicklung 11 sind die Hilfspole elektrisch mit der gleichen Polarität wie die Ihnen benachbarten Teilpole 5, aber auch mit entgegengesetzter Polarität erregbar. So ergibt sich mit den Hilfspolen 6 die Möglichkeit, die Gesamterregung des jeweiligen Pols N bzw. S zu variieren, um die Drehzahl der Gleichstrommaschine bei konstanter Ankerspannung zu verändern. Es versteht sich, daß die elektrische Magnetisierung der beiden Hilfspole 6 gemäß Fig. 1 dabei zwar gegensinnig ist, aber ebenso wie die Gesamtmagnetisierung der beiden Pole N bzw. S immer denselben Betrag aufweist. Die Hilfspole 6 sind so dimensioniert, daß sie bei Beaufschlagung ihrer Erregerwicklung 11 mit der Ankerspannung eine magnetische Erregung erfahren, die genau so groß ist wie die permanente magnetische Erregung eines der Teilpole 5. Damit lassen sich bei der Gleichstrommaschine 1 gemäß Fig. 1 drei Drehzahlen dadurch einstellen, daß die Erregerwicklungen 11 nicht oder mit unterschiedlichen Polaritäten durch die Ankerspannung beauftragt werden.

Fig. 2 zeigt eine Gleichstrommaschine 1, die hier vierpolig ausgebildet ist. Die Gleichstrommaschine 1 gemäß Fig. 2 ist bezüglich des Ankers 3 wieder ohne die Ankerwicklung und die Bürstenanordnung dargestellt. Der Erreger 4 weist hier vier Pole mit abwechselnder Polarität N und S auf. Jeder der Pole N bzw. S ist aus zwei Teilpolen 5 und einem Hilfspol 6 zusammengesetzt. Die Teilpole 5 bestehen aus Permanentmagneten 7, die unmittelbar auf den Innenradius des Jochs 8 aufgeklebt sind. Die Hilfspole 6 sind geblecht und geschraubt und sitzen teilweise in Vertiefungen 13 des Jochs 8. Sie weisen keine Polschuhe auf und sind über ihre wesentliche Erstreckung radial zu der Drehachse 2 mit ihrer Erregerwicklung 11 versehen. Die Gleichstrommaschine 1 gemäß Fig. 2 weist nicht nur in radialer Richtung einen im Vergleich zum Durchmesser des Ankers 3 kompakten Aufbau auf. Sie ist auch in axialer Richtung kompakt, indem die Ankerlänge nur das 0,4-fache des Ankerdurchmessers ausmacht. Hierdurch verkürzen sich auch die Längen der Ankerwicklung, was sich günstig auf den Stromwärmeverlust auswirkt.

### BEZUGSZEICHENLISTE

- 1 -: Gleichstrommaschine
- 2 -: Drehachse
- 3 -: Anker
- 4 -: Erreger
- 5 -: Teilpol
- 6 -: Hilfspol
- 7 -: Permanentmagnet
- 8 -: Joch
- 9 -: Eisenrückschlußstück
- 10 -: Polschuh

- 11 -: Erregerwicklung
- 13 -: Vertiefung
- N -: Pol
- S -: Pol

## Patentansprüche

1. Gleichstrommaschine mit einem Erreger, einem Anker und einer Drehachse, wobei der Erreger Permanentmagnete aufweist, die mindestens einem Paar von ungleichnamigen Polen zugeordnet sind, **dadurch gekennzeichnet**, daß jeder Pol (N bzw. S) mindestens zwei in tangentialer Richtung um die Drehachse (2) beabstandete Teilpole (5) mit Permanenterregung aufweist, zwischen denen ein Hilfspol (6) mit elektrischer Erregung angeordnet ist.

2. Gleichstrommaschine nach Anspruch 1, **dadurch gekennzeichnet**, daß die Erregung des Hilfspols (6) dieselbe oder die entgegengesetzte Polarität wie die benachbarten Teilpole (5) aufweist.

3. Gleichstrommaschine nach Anspruch 1 oder 2, **dadurch gekennzeichnet**, daß die Größe der Erregung des Hilfspols (6) stufenlos oder in Stufen einstellbar ist.

4. Gleichstrommaschine nach Anspruch 3, **dadurch gekennzeichnet**, daß die Größe der Erregung des Hilfspols (6) so geregelt wird, daß die Gleichstrommaschine (1) unter wechselnden Betriebsbedingungen eine konstante Drehzahl aufweist.

5. Gleichstrommaschine nach Anspruch 3, **dadurch gekennzeichnet**, daß der Hilfspol (6) für eine maximale Erregung vorgesehen ist, die vom Betrag her zwischen 0,45- und 0,55-mal so groß ist wie die Gesamterregung der beiden benachbarten Teilpole (5).

6. Gleichstrommaschine nach einem der Ansprüche 1 bis 5, **dadurch gekennzeichnet**, daß keine Wendepole vorgesehen sind.

7. Gleichstrommaschine nach einem der Ansprüche 1 bis 6, **dadurch gekennzeichnet**, daß der Teilpol (5), an dem der Anker (3) aus dem Bereich des jeweiligen Pols (N bzw. S) heraustritt, in der tangentialer Richtung um die Drehachse (2) hintereinander Permanentmagnete (7) aus unterschiedlichen magnetischen Materialien aufweist.

8. Gleichstrommaschine nach einem der Ansprüche 1 bis 7, **dadurch gekennzeichnet**, daß kein Anlasser vorgesehen ist.

9. Gleichstrommaschine nach einem der Ansprüche 1 bis 8, **dadurch gekennzeichnet**, daß nur ein Paar ungleichnamiger Pole (N und S) mit jeweils zwei Teilpolen (5) und einem Hilfspol (6) vorgesehen ist.

10. Gleichstrommaschine nach einem der Ansprüche 1 bis 9, **dadurch gekennzeichnet**, daß der Anker (3) ein kleines Länge zu Durchmesser-Verhältnis von maximal 0,5 aufweist.
